# EUROPEAN PATENT APPLICATION

(11) **EP 4 629 579 A1**
(43) Date of publication of application: **08.10.2025**
(21) Application number: 24167986.9
(22) Date of filing: 02.04.2024
(51) Int. Cl.: H04L 27/26, H04J 11/00

(54) **ON ADAPTATION OF SYNCHRONIZATION SIGNAL TRANSMISSION AND RECEPTION IN 6G**

(71) Applicant: Nokia Technologies Oy, 02610 Espoo (FI)
(72) Inventor: HAKOLA, Sami-Jukka, Kempele (FI); KAIKKONEN, Jorma Johannes, Oulu (FI); KARJALAINEN, Juha Pekka, Sotkamo (FI); KOSKELA, Timo, Oulu (FI)
(74) Representative: Script Intellectual Property LLP

(57) **Abstract**

An apparatus configured to: detecting at least one primary synchronization signal; and determining, at least, a transmission method of a cell based, at least partially, on the at least one primary synchronization signal. An apparatus configured to: determining, at least, a transmission method for a cell; and transmitting, to a user equipment, at least one primary synchronization signal, wherein the at least one primary synchronization signal is configured to indicate the determined transmission method.

## Description

### TECHNICAL FIELD

The example and non-limiting embodiments relate generally to initial access and, more particularly, to initial cell search.

### BACKGROUND

It is known, in initial access, for a UE to detect a primary synchronization signal.

### SUMMARY

The following summary is merely intended to be illustrative. The summary is not intended to limit the scope of the claims.

In accordance with one aspect, an apparatus comprising means for: detecting at least one primary synchronization signal; and determining, at least, a transmission method of a cell based, at least partially, on the at least one primary synchronization signal.

In accordance with one aspect, an apparatus comprising: at least one processor; and at least one memory storing instructions that, when executed by the at least one processor, cause the apparatus at least to: detect at least one primary synchronization signal; and determine, at least, a transmission method of a cell based, at least partially, on the at least one primary synchronization signal.

In accordance with one aspect, a method comprising: detecting, with a user equipment, at least one primary synchronization signal; and determining, at least, a transmission method of a cell based, at least partially, on the at least one primary synchronization signal.

In accordance with one aspect, a non-transitory computer-readable medium comprising program instructions stored thereon for performing at least the following: detecting at least one primary synchronization signal; and determining, at least, a transmission method of a cell based, at least partially, on the at least one primary synchronization signal.

In accordance with one aspect, an apparatus comprising means for: determining, at least, a transmission method for a cell; and transmitting, to a user equipment, at least one primary synchronization signal, wherein the at least one primary synchronization signal is configured to indicate the determined transmission method.

In accordance with one aspect, an apparatus comprising: at least one processor; and at least one memory storing instructions that, when executed by the at least one processor, cause the apparatus at least to: determine, at least, a transmission method for a cell; and transmit, to a user equipment, at least one primary synchronization signal, wherein the at least one primary synchronization signal is configured to indicate the determined transmission method.

In accordance with one aspect, a method comprising: determining, with a network node, at least, a transmission method for a cell; and transmitting, to a user equipment, at least one primary synchronization signal, wherein the at least one primary synchronization signal is configured to indicate the determined transmission method.

In accordance with one aspect, a non-transitory computer-readable medium comprising program instructions stored thereon for performing at least the following: determining, at least, a transmission method for a cell; and causing transmitting, to a user equipment, of at least one primary synchronization signal, wherein the at least one primary synchronization signal is configured to indicate the determined transmission method.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a flowchart illustrating steps as described herein; and
FIG. 5 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- 5GC: 5G core network
- AMF: access and mobility management function
- cRAN: cloud radio access network
- CU: central unit
- DMRS: demodulation reference signal
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the 5GC
- I/F: interface
- L1: layer 1
- LTE: long term evolution
- MAC: medium access control
- MIB: master information block
- MME: mobility management entity
- ng or NG: new generation
- ng-eNB or NG-eNB: new generation eNB
- NR: new radio
- N/W or NW: network
- O-RAN: open radio access network
- PBCH: physical broadcast channel
- PCI: physical cell identity
- PDCP: packet data convergence protocol
- PDCCH: physical downlink control channel
- PDSCH: physical downlink shared channel
- PHY: physical layer
- PLMN: public land mobile network
- PRACH: physical random access channel
- PRB: physical resource block
- PSS: primary synchronization signal
- RACH: random access channel
- RAN: radio access network
- RF: radio frequency
- RLC: radio link control
- RLM: radio link monitoring
- RRC: radio resource control
- RRH: remote radio head
- RRM: radio resource management
- RS: reference signal
- RU: radio unit
- Rx: receiver
- SCS: subcarrier spacing
- SDAP: service data adaptation protocol
- SFN: system frame number
- SGW: serving gateway
- SI: system information
- SIB: system information block
- SMF: session management function
- SSB: synchronization signal block
- SSS: secondary synchronization signal
- Tx: transmitter
- UE: user equipment (e.g., a wireless, typically mobile device)
- UPF: user plane function
- VNR: virtualized network function

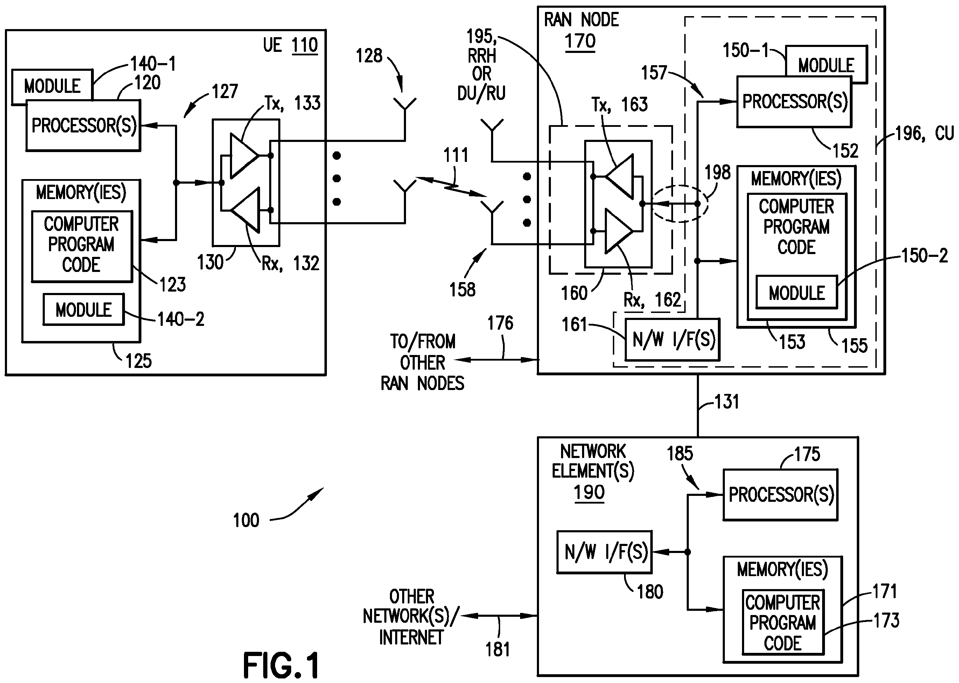

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to synchronization signal transmission, for example energy efficient synchronization signal transmission scheme(s) or method(s) operating in 6G networks.

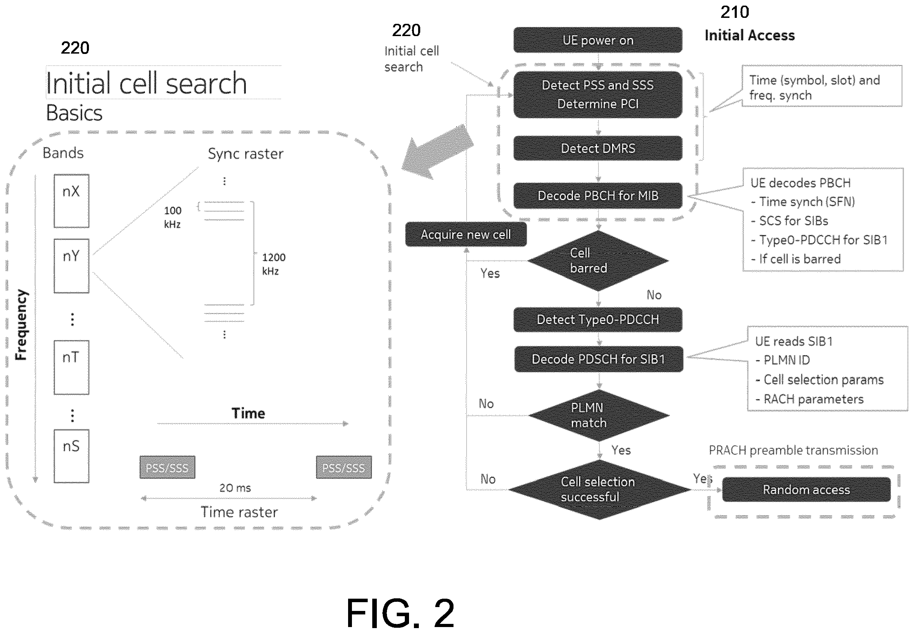

Features as described herein may generally relate to the initial cell search procedure that is part of the initial access the UE performs when accessing the cellular system. Referring now to FIG. 2, illustrated is an example of initial access (210) in an NR system. After the UE powers on, initial cell search (220) may be performed. The UE may detect primary synchronization signal(s) (PSS) and/or secondary synchronization signal(s) (SSS), and may determine a physical cell identity (PCI). The UE may also detect demodulation reference signal(s) (DMRS). These detections may require time (e.g. symbol, slot) and/or frequency synchronization with the cell. The UE may also decode the physical broadcast channel (PBCH) for a master information block (MIB). The UE may decode PBCH using time synchronization (e.g. system frame number (SFN)), subcarrier spacing (SCS) for system information block(s) (SIB), and/or Type0-PDCCH for SIB1, for example if the cell is barred.

The initial cell search (220) may require determination and use of synch(ronization) raster points (e.g. predefined points in the frequency domain that may be used to transmit synchronization signals). The UE may check the synch raster points to detect PSS and/or SSS.

After initial cell search, the UE may determine whether or not the cell is barred (e.g. not accessible or accessible). If it is barred, the UE may acquire a new cell and perform initial cell search again. If the cell is not barred, the UE may detect Type1-PDCCH, and may decode a physical downlink shared channel (PDSCH) for SIB1. The UE may read SIB1 and determined the public land mobile network (PLMN) ID, cell selection parameters, and/or RACH parameters. The UE may determine whether the PLMN is a match. If it is not a match, the UE may acquire a new cell and perform initial cell search again. If the PLMN is a match, the UE may determine whether the cell selection is successful. If it is not successful, the UE may acquire a new cell and perform initial cell search again. If the cell selection is successful, the UE may perform random access to the cell, for example using a physical random access channel (PRACH) preamble transmission.

It may be noted that network energy saving is of great importance for environmental sustainability, to reduce environmental impact (greenhouse gas emissions), and for operational cost savings. In the future, 6G may become pervasive across industries and geographical areas, which may mean handling of more advanced services and applications requiring very high data rates (e.g. XR), networks being denser, use of more antennas, larger bandwidths and more frequency bands, etc. The environmental impact of future 6G networks needs to stay under control, and novel solutions to improve network energy savings need to be developed.

Energy consumption has become a key part of the operators' OPEX. According to the report from GSMA (GSMA, 5G energy efficiencies: Green is the new black, https://data.gsmaintelligence.com/api-web/v2/research-file-download?id=54165956&file=241120-5G-energy.pdf), the energy cost on mobile networks accounts for ~23% of the total operator cost. Most of the energy consumption comes from the radio access network and in particular from the Active Antenna Unit (AAU), with data centers and fiber transport accounting for a smaller share. The power consumption of a radio access can be split into two parts: the dynamic part which is only consumed when data transmission/reception is ongoing, and the static part which is consumed all the time to maintain the necessary operation of the radio access devices, even when the data transmission/reception is not on-going.

A technical effect of example embodiments of the present disclosure may be to enable or improve energy saving.

In the NR system, the cell may transmit a synchronization signal block (SSB) comprising PSS, SSS, DMRS of PBCH, and PBCH in a periodic manner. The periodicity for the SSB may be configured to be 10, 20, 40, 80 or 160 ms, but in initial access the UE may always assume the periodicity to be 20 ms (see, e.g., 3GPP TS 38.213, section 4.1).

In 3GPP TR 38.864 V18.1.0, Study on network energy savings for NR, it was evaluated how much energy saving may be achieved with the following techniques: "simplified version of SSB, such as only PSS, only PSS and SSS without PBCH, or PSS and SSS with partial PBCH". The report also listed what would be the specification impacts from such schemes: signaling mechanism to inform the UE about the use of simplified version of SSB, if needed; changes to SSB may have impact on SI acquisition, initial access, radio resource management (RRM) and/or radio link monitoring (RLM) measurements, and mobility for legacy UEs and UEs that may not support the technique; and/or technique may be enabled for a carrier only when legacy UEs are not using the carrier.

In an example embodiment, a signaling/indication mechanism for initial cell search/access UEs may be provided that signals or indicates the current transmission method in the cell: PSS only; PSS and SSS; PSS, SSS and PBCH; or PSS and/or SSS with normal periodicity but PSS, SSS and/or PBCH with reduced periodicity. In the present disclosure, the term "transmission method" may be understood as a method involving transmission of signals according to, for example, a transmission structure. Different transmission methods may involve the transmission of different content; by determining a transmission method, a UE may determine a content of transmission(s) received from a cell, and/or the time and/or frequency resources on which such content is to be transmitted/received.

In an example embodiment, a PSS signal may be designed to carry information that signals one or more of: presence of 6G system (cells) on a certain synch raster point; and/or a transmission structure and/or periodicity of synchronization signal and/or broadcast signal/channel structure. In an example embodiment, the UE may determine the currently used transmission method in the cell based, at least partially, on a detected PSS signal. In an example embodiment, the UE may determine UE behavior based, at least partially, on the determined transmission method in the cell.

In an example embodiment, the network may determine to use a transmission method, for example with respect to energy efficiency considerations, and may alert the UE of the determined transmission method using a configured PSS.

In the present disclosure, the term "transmission structure" may refer to which signals will be transmitted by the network, for example so that the signals may be considered as one block (e.g. in the same slot or in the adjacent slot, and/or same symbols in a slot). Based on, for example, a state of the network, the network may choose between different options for synchronization signal transmission. For example, the network may determine which synchronization signals it will transmit, the periodicity with which it will transmit the determined synchronization signals, etc. The network may determine a transmission structure and/or periodicity based, at least partially, on a load of the network, an expected load of the network, network traffic, etc.

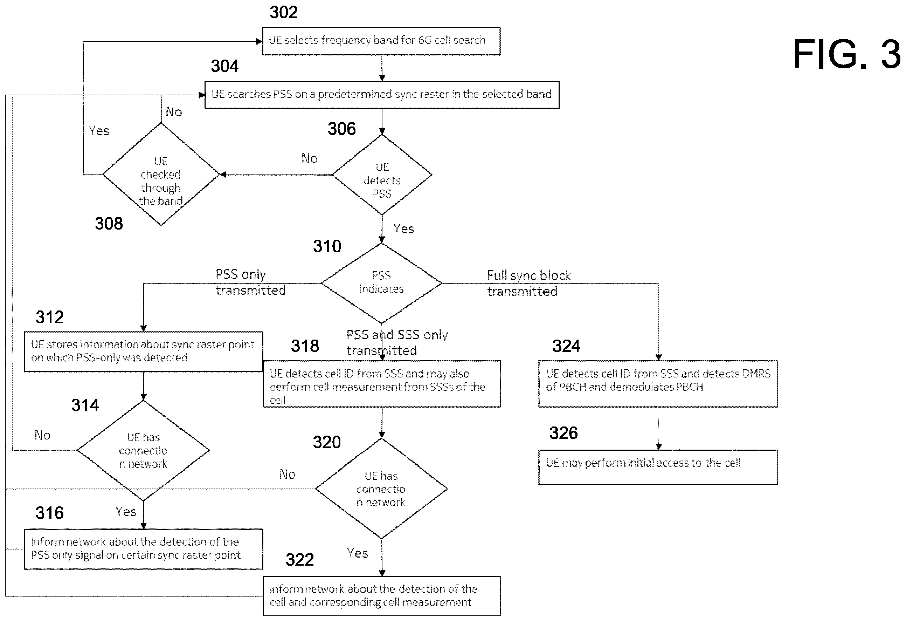

Referring now to FIG. 3, illustrated is an example of UE operation, during initial cell selection or (non-initial) cell search, upon detection of PSS, according to example embodiments of the present disclosure.

At 302, the UE may select a frequency band for 6G cell search. At 304, the UE may search for PSS on a predetermined synch raster in the selected band. At 306, the UE may determine whether PSS is detected. If PSS is not detected, at 308 the UE may determine whether it has checked through the band for PSS. If the UE has not searched the whole frequency band, at 304 the UE may continue to search. If the UE has searched the whole frequency band, at 302 the UE may select a different frequency band for 6G cell search.

If the UE does detect PSS at 306, at 310 the UE may determine what the PSS indicates. In an example embodiment, the UE may determine, based on the detected PSS, whether only PSS is transmitted, or whether an additional synchronization signal, such as SSS, is expected to be transmitted with/after PSS and/or whether system information is expected to be transmitted with/after PSS.

In an example embodiment, the PSS may indicate the periodicity of the PSS transmission.

Additionally or alternatively, the PSS may indicate a (minimum) periodicity of the additional synchronization signal(s) and/or system information. The system information may be information needed to perform initial access, or information to acquire the system information (e.g. the PBCH may include information that may be used to acquire minimum system information).

Additionally or alternatively, the PSS may indicate presence of additional synchronization signal(s), such as SSS, and/or system information in the carrier (i.e. present or not present at all). In some example embodiments, if the base station (gNB) is in a power saving state, it may choose to omit the transmission of additional synchronization signal(s) and/or system information.

Additionally or alternatively, the PSS may indicate transmission of additional synchronization signal(s), such as SSS, and/or system information in the PSS transmission occasion, or after the PSS transmission. The transmission occasion may refer to a set of symbols or frequency domain resources in proximity of the PSS transmission.

Additionally or alternatively, the PSS may indicate further information regarding the type of the deployment, such as 6G only carrier, 5G+6G carrier, etc.

Additionally or alternatively, the PSS may indicate presence of additional SS (or SI), and may indicate the timing information used for determining in which phase of the synchronization signal transmission cycle the received PSS is located. The synchronization signal transmission cycle may comprise N PSS periods, and every Nth (or Mth) period may include additional SS and/or SI. Thus, the PSS may indicate the phase of the cycle and how many PSS periods until the presence of additional information. The PSS signal/sequence may carry information on the cycle.

In an example embodiment, the information in PSS may be carried in the form of different sequences (e.g. using different root sequence of a sequence family, or a permutation, a cyclic shift, or other alteration of the same root sequence) in one or more symbols.

In an example embodiment, different combination of PSS only / PSS + SSS / PSS+SSS+PBCH DMRS + PBCH may be indicated with different sequence type. For example, PSS-only may be indicated with a PSS sequence with Zadoff-Chu sequence, and a combination of PSS + SSS may be indicated with a PSS sequence with m-sequence.

In an example embodiment, an indication of different above combinations may be associated with a set of different physical resource block (PRB) sizes, or a number of resource elements (RE) associated with a PSS sequence, or sequence length of PSS. For example, some predetermined PRB size of PRBs, or number of REs, or PSS sequence length may be used to determine whether PSS-only, or PSS+SSS, or PSS+SSS+PBCH and DMRS + PBCH is indicated. For example, two different PSS sequence lengths, i.e. X1, X2, where X1<X2, may be predefined. In an example embodiment, the UE may perform the following procedure to detect the indicated information: 1) Upon reception of PSS, the UE may perform three different hypothesis of PSS sequence lengths. For example, the UE may perform/calculate hypothesis one: pre-determined PSS sequence length is ≤ X1. Accordingly the UE may compute correlation between pre-determined PSS sequence length and received PSS signal, and store the correlation value. For example, the UE may perform/calculate hypothesis two: pre-determined PSS sequence length is >X1 and <X2. Accordingly, the UE may compute correlation between the pre-determined PSS sequence length and the received PSS signal, and store the correlation value. For example, the UE may perform/calculate hypothesis three: pre-determined PSS sequence length is ≥X2. Accordingly, the UE may compute correlation between pre-determined PSS sequence length and received PSS signal, and store the correlation value. 2) When above different hypothesis values are computed, the UE may select the maximum correlation value out of them, and determine the indicated information accordingly.

In an example embodiment, based on the information provided by the PSS at 310, the UE may select behavior for performing an initial access procedure. For example, FIG. 3 illustrates behavior when PSS only is transmitted, behavior when PSS and SSS only are transmitted, and behavior when a full sync block is transmitted. However, other options may be available; for example, the UE may select behavior in response to PSS, SSS, and PBCH being transmitted, in response to PSS and SSS being transmitted with normal periodicity while PBCH is transmitted with a reduced periodicity, etc.

If only PSS is transmitted, or detected by the UE, at 312 the UE may store information about the sync raster point on which the PSS was detected. It may be noted that the UE may store information about the sync raster point on which the PSS was detected whenever the PSS is detected, for example even when the PSS indicates that additional synchronization signals are transmitted.

In an example embodiment, if periodicity of the PSS is indicated or known (i.e. specified), the UE may choose to continue monitoring the carrier for the next PSS occurrence, or if time allows it to re-tune to another carrier for cell search, measurement or other reception, the UE may choose to re-tune to another carrier. The decision of whether to re-tune for another carrier may depend also on the signal strength/quality of the detected PSS and the need (i.e. is there additional candidate carriers for search or measurement, or whether the UE should re-tune back to the serving cell/carrier for other signal reception).

In an example embodiment, if the PSS indicates the periodicity of additional synchronization signal(s), such as SSS, and/or system information, the UE may continue monitoring the carrier or, if time allows, the UE may re-tune to another carrier for cell search, measurement or other reception.

In an example embodiment, if the PSS indicates that system information is not present in the carrier, the UE may choose, if the UE is doing initial cell selection, to continue cell search on another carrier. Alternatively, if the UE is attempting to do measurements for some purpose on the carrier, the UE may continue to monitor for additional synchronization signal(s), such as SSS. The purpose of the measurement may be, for example, cell selection, re-selection candidates, handover candidates, or some other mobility or other related procedure, such as carrier aggregation.

At 314, the UE may determine whether it has a connection with the network. If the UE does not have a connection with the network, at 304 the UE may continue searching for PSS. If the UE does have a connection with the network, at 316 the UE may inform the network about the detection of the PSS only signal on the sync raster point. The UE may then, at 304, continue searching for PSS, for example until the network changes the transmission structure.

If PSS and additional synchronization signal(s), such as SSS, are transmitted, or detected by the UE, at 318 the UE may detect cell ID from the SSS and may also perform cell measurement from the SSS of the cell.

In an example embodiment, if PSS and additional synchronization signal(s), such as SSS, are transmitted, or detected by the UE, the UE may perform (further) cell identification based on the information carried by the additional synchronization signal(s), such as SSS. If the timing location of the additional synchronization signal(s), such as SSS, is known and further information is provided by additional synchronization signal(s), the UE may obtain further timing information. For example, additional synchronization signal(s) may be sent at the first slot of a radio frame, or an additional index may be carried by additional synchronization signal(s) enabling the UE to identify the symbol/slot timing.

Additionally or alternatively, if PSS and additional synchronization signal (s) are detected by the UE, the UE may perform measurements, for example for mobility purposes, based on the additional synchronization signal(s), such as SSS (and PSS).

At 320, the UE may determine whether it has a connection with the network. If the UE does not have a connection with the network, at 304 the UE may continue searching for PSS. If the UE does have a connection with the network, at 322, the UE may inform the network about the detection of the cell and corresponding cell measurement. The UE may then, at 304, continue searching for PSS, for example until the network changes the transmission structure.

If PSS and additional synchronization signal(s), such as SSS, and/or system information is transmitted, or detected by the UE, at 324 the UE may detect cell ID from the SSS and may detect DMRS of the PBCH, and may demodulate the PBCH.

In an example embodiment, if PSS and additional synchronization signal(s), such as SSS, and/or system information is transmitted, or detected by the UE, the UE may perform (further) cell identification based on the information provided by the additional synchronization signal(s), such as SSS, and system information. Further timing information may also be obtained via additional synchronization signal(s), such as SSS, and system information.

Additionally or alternatively, if system information is detected by the UE, the UE may perform measurements, for example for mobility purposes, based on the additional synchronization signal(s) and/or reference signal(s) included in the system information transmission.

At 326, the UE may perform (initial) access to the cell.

A technical effect of example embodiments of the present disclosure may be to enable reduction of overhead of the always-on type of broadcast signals.

A technical effect of example embodiments of the present disclosure may be to give an option to adjust, dynamically, the periodicity of system information of broadcast signals.

A technical effect of example embodiments of the present disclosure may be to, as the always-on system information periodicity may be relaxed, increase the system information periodicity without increasing system overhead so that, for example, PBCH/MIB may carry necessary information for the UE to perform initial access (RACH) to the cell.

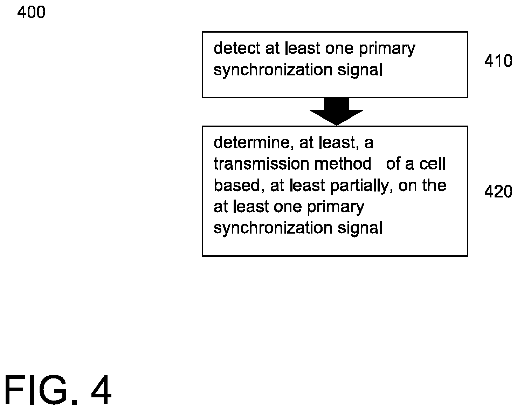

FIG. 4 illustrates the potential steps of an example method 400. The example method 400 may include: detecting at least one primary synchronization signal, 410; and determining, at least, a transmission method of a cell based, at least partially, on the at least one primary synchronization signal, 420. The example method 400 may be performed, for example, with a UE.

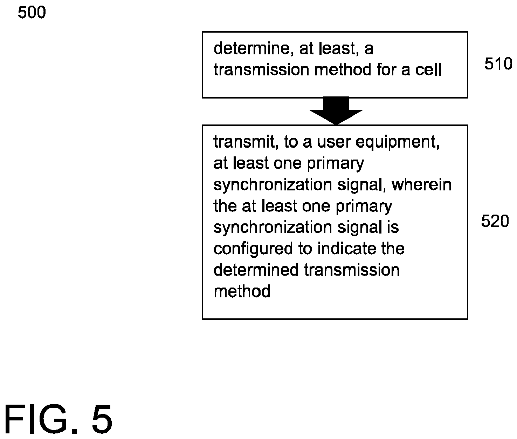

FIG. 5 illustrates the potential steps of an example method 500. The example method 500 may include: determining, at least, a transmission method for a cell, 510; and transmitting, to a user equipment, at least one primary synchronization signal, wherein the at least one primary synchronization signal is configured to indicate the determined transmission method, 520. The example method 500 may be performed, for example, with a network, a base station, a gNB, a network node, a network entity, etc.

In accordance with one example embodiment, an apparatus may comprise: at least one processor; and at least one memory storing instructions that, when executed by the at least one processor, cause the apparatus at least to: detect at least one primary synchronization signal; and determine, at least, a transmission method of a cell based, at least partially, on the at least one primary synchronization signal.

The example apparatus may be further configured to: determine, based on the transmission method of the cell, to perform access of the cell.

The transmission method may comprise only transmission of the at least one primary synchronization signal, and the example apparatus may be further configured to at least one of: store information about a synchronization raster point on which the at least one primary synchronization signal was detected; continue monitoring of a carrier; or re-tune from monitoring of the carrier to monitoring of an at least partially different carrier.

The transmission method may comprise transmission of the at least one primary synchronization signal and at least one secondary synchronization signal, and the example apparatus may be further configured to at least one of: store information about a synchronization raster point on which the at least one primary synchronization signal was detected; continue monitoring of a carrier; re-tune from monitoring of the carrier to monitoring of an at least partially different carrier; determine a cell identification of the cell based, at least partially, on the at least one secondary synchronization signal; obtain timing information based, at least partially, on the at least one secondary synchronization signal; or perform measurement of, at least, the at least one secondary synchronization signal.

The transmission method may comprise transmission of the at least one primary synchronization signal, at least one secondary synchronization signal, and at least part of a physical broadcast channel, and the example apparatus may be further configured to at least one of: store information about a synchronization raster point on which the at least one primary synchronization signal was detected; continue monitoring of a carrier; re-tune from monitoring of the carrier to monitoring of an at least partially different carrier; determine a cell identification of the cell based, at least partially, on the at least one secondary synchronization signal; determine a cell identification of the cell based, at least partially, on system information; perform measurement of, at least, the at least one secondary synchronization signal; perform reference signal measurements based, at least partially, on the system information; obtain timing information based, at least partially, on the at least one secondary synchronization signal; obtain timing information based, at least partially, on the at least part of the physical broadcast channel; or detect a demodulation reference signal of the at least part of the physical broadcast channel and demodulating the at least part of the physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

Determining the transmission method of the cell based, at least partially, on the at least one primary synchronization signal may comprise the example apparatus being further configured to: determine a sequence type of the at least one primary synchronization signal; and determine the transmission method of the cell based, at least partially, on the determined sequence type.

Determining the transmission method of the cell based, at least partially, on the at least one primary synchronization signal may comprise the example apparatus being further configured to: determine at least one of: a physical resource block size associated with the at least one primary synchronization signal, a number of resource elements associated with the at least one primary synchronization signal, or a sequence length associated with the at least one primary synchronization signal; and determine the transmission method of the cell based, at least partially, on the at least one of the physical resource block size, the number of resource elements, or the sequence length.

The sequence length may be determined, and the example apparatus may be further configured to: determine a first correlation between a predetermined sequence length and the sequence length associated with the at least one primary synchronization signal; determine a second correlation between a predetermined sequence length and the sequence length associated with the at least one primary synchronization signal; determine a third correlation between a predetermined sequence length and the sequence length associated with the at least one primary synchronization signal; determine a maximum correlation among the first correlation, the second correlation, and the third correlation; and determine the transmission method of the cell based, at least partially, on the maximum correlation.

In accordance with one aspect, an example method may be provided comprising: detecting, with a user equipment, at least one primary synchronization signal; and determining, at least, a transmission method of a cell based, at least partially, on the at least one primary synchronization signal.

The example method may further comprise: determining, based on the transmission method of the cell, to perform access of the cell.

The transmission method may comprise only transmission of the at least one primary synchronization signal, and the example method may further comprise at least one of: storing information about a synchronization raster point on which the at least one primary synchronization signal was detected; continuing monitoring of a carrier; or re-tuning from monitoring of the carrier to monitoring of an at least partially different carrier.

The transmission method may comprise transmission of the at least one primary synchronization signal and at least one secondary synchronization signal, and the example method may further comprise at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; obtaining timing information based, at least partially, on the at least one secondary synchronization signal; or performing measurement of, at least, the at least one secondary synchronization signal.

The transmission method may comprise transmission of the at least one primary synchronization signal, at least one secondary synchronization signal, and at least part of a physical broadcast channel, and the example method may further comprise at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; determining a cell identification of the cell based, at least partially, on system information; performing measurement of, at least, the at least one secondary synchronization signal; performing reference signal measurements based, at least partially, on the system information; obtaining timing information based, at least partially, on the at least one secondary synchronization signal; obtaining timing information based, at least partially, on the at least part of the physical broadcast channel; or detecting a demodulation reference signal of the at least part of the physical broadcast channel and demodulating the at least part of the physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

The determining the transmission method of the cell based, at least partially, on the at least one primary synchronization signal may comprise: determining a sequence type of the at least one primary synchronization signal; and determining the transmission method of the cell based, at least partially, on the determined sequence type.

The determining of the transmission method of the cell based, at least partially, on the at least one primary synchronization signal, and the example method may further comprise: determining at least one of: a physical resource block size associated with the at least one primary synchronization signal, a number of resource elements associated with the at least one primary synchronization signal, or a sequence length associated with the at least one primary synchronization signal; and determining the transmission method of the cell based, at least partially, on the at least one of the physical resource block size, the number of resource elements, or the sequence length.

The sequence length may be determined, and the example method may further comprise: determining a first correlation between a predetermined sequence length and the sequence length associated with the at least one primary synchronization signal; determining a second correlation between a predetermined sequence length and the sequence length associated with the at least one primary synchronization signal; determining a third correlation between a predetermined sequence length and the sequence length associated with the at least one primary synchronization signal; determining a maximum correlation among the first correlation, the second correlation, and the third correlation; and determining the transmission method of the cell based, at least partially, on the maximum correlation.

In accordance with one example embodiment, an apparatus may comprise: circuitry configured to perform: detecting, with a user equipment, at least one primary synchronization signal; and circuitry configured to perform: determining, at least, a transmission method of a cell based, at least partially, on the at least one primary synchronization signal.

In accordance with one example embodiment, an apparatus may comprise: processing circuitry; memory circuitry including computer program code, the memory circuitry and the computer program code configured to, with the processing circuitry, enable the apparatus to: detect at least one primary synchronization signal; and determine, at least, a transmission method of a cell based, at least partially, on the at least one primary synchronization signal.

As used in this application, the term "circuitry" or "means" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: detecting at least one primary synchronization signal; and determining, at least, a transmission method of a cell based, at least partially, on the at least one primary synchronization signal.

The means may be further configured for: determining, based on the transmission method of the cell, to perform access of the cell.

The transmission method may comprise only transmission of the at least one primary synchronization signal, and the means may be further configured for at least one of: storing information about a synchronization raster point on which the at least one primary synchronization signal was detected; continuing monitoring of a carrier; or re-tuning from monitoring of the carrier to monitoring of an at least partially different carrier.

The transmission method may comprise transmission of the at least one primary synchronization signal and at least one secondary synchronization signal, and the means may be further configured for at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; obtaining timing information based, at least partially, on the at least one secondary synchronization signal; or performing measurement of, at least, the at least one secondary synchronization signal.

The transmission method may comprise transmission of the at least one primary synchronization signal, at least one secondary synchronization signal, and at least part of a physical broadcast channel, and the means may be further configured for at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; determining a cell identification of the cell based, at least partially, on system information; performing measurement of, at least, the at least one secondary synchronization signal; performing reference signal measurements based, at least partially, on the system information; obtaining timing information based, at least partially, on the at least one secondary synchronization signal; obtaining timing information based, at least partially, on the at least part of the physical broadcast channel; or detecting a demodulation reference signal of the at least part of the physical broadcast channel and demodulating the at least part of the physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

The means configured for determining the transmission method of the cell based, at least partially, on the at least one primary synchronization signal may comprise means configured for: determining a sequence type of the at least one primary synchronization signal; and determining the transmission method of the cell based, at least partially, on the determined sequence type.

The means configured for determining the transmission method of the cell based, at least partially, on the at least one primary synchronization signal may comprise means configured for: determining at least one of: a physical resource block size associated with the at least one primary synchronization signal, a number of resource elements associated with the at least one primary synchronization signal, or a sequence length associated with the at least one primary synchronization signal; and determining the transmission method of the cell based, at least partially, on the at least one of the physical resource block size, the number of resource elements, or the sequence length.

The sequence length may be determined, wherein the means may be further configured for: determining a first correlation between a predetermined sequence length and the sequence length associated with the at least one primary synchronization signal; determining a second correlation between a predetermined sequence length and the sequence length associated with the at least one primary synchronization signal; determining a third correlation between a predetermined sequence length and the sequence length associated with the at least one primary synchronization signal; determining a maximum correlation among the first correlation, the second correlation, and the third correlation; and determining the transmission method of the cell based, at least partially, on the maximum correlation.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: detect at least one primary synchronization signal; and determine, at least, a transmission method of a cell based, at least partially, on the at least one primary synchronization signal.

In accordance with one example embodiment, a non-transitory computer-readable medium comprising program instructions stored thereon for performing at least the following: detecting at least one primary synchronization signal; and determining, at least, a transmission method of a cell based, at least partially, on the at least one primary synchronization signal.

The example non-transitory computer-readable medium may further comprise program instructions stored thereon for performing: determining, based on the transmission method of the cell, to perform access of the cell.

The transmission method may comprise only transmission of the at least one primary synchronization signal, wherein the program instructions stored thereon may be further for performing at least one of: storing information about a synchronization raster point on which the at least one primary synchronization signal was detected; continuing monitoring of a carrier; or re-tuning from monitoring of the carrier to monitoring of an at least partially different carrier.

The transmission method may comprise transmission of the at least one primary synchronization signal and at least one secondary synchronization signal, wherein the program instructions stored thereon may be further for performing at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; obtaining timing information based, at least partially, on the at least one secondary synchronization signal; or performing measurement of, at least, the at least one secondary synchronization signal.

The transmission method may comprise transmission of the at least one primary synchronization signal, at least one secondary synchronization signal, and at least part of a physical broadcast channel, wherein the program instructions stored thereon may be further for performing at least one of: storing information about a synchronization raster point on which the at least one primary synchronization signal was detected; continuing monitoring of a carrier; re-tuning from monitoring of the carrier to monitoring of an at least partially different carrier; determining a cell identification of the cell based, at least partially, on the at least one secondary synchronization signal; determining a cell identification of the cell based, at least partially, on system information; performing measurement of, at least, the at least one secondary synchronization signal; performing reference signal measurements based, at least partially, on the system information; obtaining timing information based, at least partially, on the at least one secondary synchronization signal; obtaining timing information based, at least partially, on the at least part of the physical broadcast channel; or detecting a demodulation reference signal of the at least part of the physical broadcast channel and demodulating the at least part of the physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

The program instructions stored thereon for performing determining of the transmission method of the cell based, at least partially, on the at least one primary synchronization signal may comprise program instructions stored thereon for performing: determining a sequence type of the at least one primary synchronization signal; and determining the transmission method of the cell based, at least partially, on the determined sequence type.

The program instructions stored thereon for performing determining the transmission method of the cell based, at least partially, on the at least one primary synchronization signal may comprise program instructions stored thereon for performing: determining at least one of: a physical resource block size associated with the at least one primary synchronization signal, a number of resource elements associated with the at least one primary synchronization signal, or a sequence length associated with the at least one primary synchronization signal; and determining the transmission method of the cell based, at least partially, on the at least one of the physical resource block size, the number of resource elements, or the sequence length.

The sequence length may be determined, wherein the program instructions stored thereon may be further for performing: determining a first correlation between a predetermined sequence length and the sequence length associated with the at least one primary synchronization signal; determining a second correlation between a predetermined sequence length and the sequence length associated with the at least one primary synchronization signal; determining a third correlation between a predetermined sequence length and the sequence length associated with the at least one primary synchronization signal; determining a maximum correlation among the first correlation, the second correlation, and the third correlation; and determining the transmission method of the cell based, at least partially, on the maximum correlation.

In accordance with another example embodiment, a non-transitory program storage device readable by a machine may be provided, tangibly embodying instructions executable by the machine for performing operations, the operations comprising: detecting at least one primary synchronization signal; and determining, at least, a transmission method of a cell based, at least partially, on the at least one primary synchronization signal.

In accordance with another example embodiment, a non-transitory computer-readable medium comprising instructions that, when executed by an apparatus, cause the apparatus to perform at least the following: detecting at least one primary synchronization signal; and determining, at least, a transmission method of a cell based, at least partially, on the at least one primary synchronization signal.

A computer implemented system comprising: at least one processor and at least one non-transitory memory storing instructions that, when executed by the at least one processor, cause the system at least to perform: detecting at least one primary synchronization signal; and determining, at least, a transmission method of a cell based, at least partially, on the at least one primary synchronization signal.

A computer implemented system comprising: means for detecting at least one primary synchronization signal; and means for determining, at least, a transmission method of a cell based, at least partially, on the at least one primary synchronization signal.

In accordance with one example embodiment, an apparatus may comprise: at least one processor; and at least one memory storing instructions that, when executed by the at least one processor, cause the apparatus at least to: determine, at least, a transmission method for a cell; and transmit, to a user equipment, at least one primary synchronization signal, wherein the at least one primary synchronization signal may be configured to indicate the determined transmission method.

The transmission method may be determined based, at least partially, on at least one of: network traffic in the cell, a load of the cell, or an expected load for the cell.

The transmission method may comprise one of: only transmission of the at least one primary synchronization signal, transmission of the at least one primary synchronization signal and at least one secondary synchronization signal, or transmission of the at least one primary synchronization signal, at least one secondary synchronization signal, and at least part of a physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

A sequence type of the at least one primary synchronization signal may be configured to indicate the transmission method.

At least one of: a physical resource block size associated with the at least one primary synchronization signal, a number of resource elements associated with the at least one primary synchronization signal, or a sequence length associated with the at least one primary synchronization signal may be configured to indicate the transmission method.

In accordance with one aspect, an example method may be provided comprising: determining, with a network node, at least, a transmission method for a cell; and transmitting, to a user equipment, at least one primary synchronization signal, wherein the at least one primary synchronization signal may be configured to indicate the determined transmission method.

The transmission method may be determined based, at least partially, on at least one of: network traffic in the cell, a load of the cell, or an expected load for the cell.

The transmission method may comprise one of: only transmission of the at least one primary synchronization signal, transmission of the at least one primary synchronization signal and at least one secondary synchronization signal, or transmission of the at least one primary synchronization signal, at least one secondary synchronization signal, and at least part of a physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

A sequence type of the at least one primary synchronization signal may be configured to indicate the transmission method.

At least one of: a physical resource block size associated with the at least one primary synchronization signal, a number of resource elements associated with the at least one primary synchronization signal, or a sequence length associated with the at least one primary synchronization signal may be configured to indicate the transmission method.

In accordance with one example embodiment, an apparatus may comprise: circuitry configured to perform: determining, with a network node, at least, a transmission method for a cell; and circuitry configured to perform: transmitting, to a user equipment, at least one primary synchronization signal, wherein the at least one primary synchronization signal may be configured to indicate the determined transmission method.

In accordance with one example embodiment, an apparatus may comprise: processing circuitry; memory circuitry including computer program code, the memory circuitry and the computer program code configured to, with the processing circuitry, enable the apparatus to: determine, at least, a transmission method for a cell; and transmit, to a user equipment, at least one primary synchronization signal, wherein the at least one primary synchronization signal may be configured to indicate the determined transmission method.

In accordance with one example embodiment, an apparatus may comprise means for: determining, at least, a transmission method for a cell; and transmitting, to a user equipment, at least one primary synchronization signal, wherein the at least one primary synchronization signal may be configured to indicate the determined transmission method.

The transmission method may be determined based, at least partially, on at least one of: network traffic in the cell, a load of the cell, or an expected load for the cell.

The transmission method may comprise one of: only transmission of the at least one primary synchronization signal, transmission of the at least one primary synchronization signal and at least one secondary synchronization signal, or transmission of the at least one primary synchronization signal, at least one secondary synchronization signal, and at least part of a physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

A sequence type of the at least one primary synchronization signal may be configured to indicate the transmission method.

At least one of: a physical resource block size associated with the at least one primary synchronization signal, a number of resource elements associated with the at least one primary synchronization signal, or a sequence length associated with the at least one primary synchronization signal may be configured to indicate the transmission method.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: determine, at least, a transmission method for a cell; and causing transmit, to a user equipment, of at least one primary synchronization signal, wherein the at least one primary synchronization signal may be configured to indicate the determined transmission method.

In accordance with one example embodiment, a non-transitory computer-readable medium comprising program instructions stored thereon for performing at least the following: determining, at least, a transmission method for a cell; and causing transmitting, to a user equipment, of at least one primary synchronization signal, wherein the at least one primary synchronization signal may be configured to indicate the determined transmission method.

The transmission method may be determined based, at least partially, on at least one of: network traffic in the cell, a load of the cell, or an expected load for the cell.

The transmission method may comprise one of: only transmission of the at least one primary synchronization signal, transmission of the at least one primary synchronization signal and at least one secondary synchronization signal, or transmission of the at least one primary synchronization signal, at least one secondary synchronization signal, and at least part of a physical broadcast channel.

The at least one primary synchronization signal may be configured to indicate at least one of: a periodicity associated with primary synchronization signal transmission, a periodicity associated with synchronization signal transmission, a periodicity associated with system information transmission, a periodicity associated with demodulation reference signal transmission, a periodicity associated with physical broadcast channel transmission, whether at least one secondary synchronization signal may be transmitted with or after the at least one primary synchronization signal, whether system information may be transmitted with or after the at least one primary synchronization signal, whether at least one demodulation reference signal may be transmitted with or after the at least one primary synchronization signal, whether at least part of a physical broadcast channel may be transmitted with or after the at least one primary synchronization signal, a type of deployment of the cell, or information associated with a synchronization signal transmission cycle of the transmission method of the cell.

A sequence type of the at least one primary synchronization signal may be configured to indicate the transmission method.

At least one of: a physical resource block size associated with the at least one primary synchronization signal, a number of resource elements associated with the at least one primary synchronization signal, or a sequence length associated with the at least one primary synchronization signal may be configured to indicate the transmission method.

In accordance with another example embodiment, a non-transitory program storage device readable by a machine may be provided, tangibly embodying instructions executable by the machine for performing operations, the operations comprising: determining, at least, a transmission method for a cell; and causing transmitting, to a user equipment, of at least one primary synchronization signal, wherein the at least one primary synchronization signal may be configured to indicate the determined transmission method.

In accordance with another example embodiment, a non-transitory computer-readable medium comprising instructions that, when executed by an apparatus, cause the apparatus to perform at least the following: determining, at least, a transmission method for a cell; and causing transmitting, to a user equipment, of at least one primary synchronization signal, wherein the at least one primary synchronization signal may be configured to indicate the determined transmission method.

A computer implemented system comprising: at least one processor and at least one non-transitory memory storing instructions that, when executed by the at least one processor, cause the system at least to perform: determining, at least, a transmission method for a cell; and causing transmitting, to a user equipment, of at least one primary synchronization signal, wherein the at least one primary synchronization signal may be configured to indicate the determined transmission method.

A computer implemented system comprising: means for determining, at least, a transmission method for a cell; and means for causing transmitting, to a user equipment, of at least one primary synchronization signal, wherein the at least one primary synchronization signal may be configured to indicate the determined transmission method.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for:
detecting at least one primary synchronization signal; and
determining, at least, a transmission method of a cell based, at least partially, on the at least one primary synchronization signal.

2. The apparatus of claim 1, wherein the means are further configured for:
determining, based on the transmission method of the cell, to perform access of the cell.

3. The apparatus of claim 1 or 2, wherein the transmission method comprises only transmission of the at least one primary synchronization signal, wherein the means are further configured for at least one of:
storing information about a synchronization raster point on which the at least one primary synchronization signal was detected;
continuing monitoring of a carrier; or
re-tuning from monitoring of the carrier to monitoring of an at least partially different carrier.

4. The apparatus of claim 1 or 2, wherein the transmission method comprises transmission of the at least one primary synchronization signal and at least one secondary synchronization signal, wherein the means are further configured for at least one of:
storing information about a synchronization raster point on which the at least one primary synchronization signal was detected;
continuing monitoring of a carrier;
re-tuning from monitoring of the carrier to monitoring of an at least partially different carrier;
determining a cell identification of the cell based, at least partially, on the at least one secondary synchronization signal;
obtaining timing information based, at least partially, on the at least one secondary synchronization signal; or
performing measurement of, at least, the at least one secondary synchronization signal.

5. The apparatus of claim 1 or 2, wherein the transmission method comprises transmission of the at least one primary synchronization signal, at least one secondary synchronization signal, and at least part of a physical broadcast channel, wherein the means are further configured for at least one of:
storing information about a synchronization raster point on which the at least one primary synchronization signal was detected;
continuing monitoring of a carrier;
re-tuning from monitoring of the carrier to monitoring of an at least partially different carrier;
determining a cell identification of the cell based, at least partially, on the at least one secondary synchronization signal;
determining a cell identification of the cell based, at least partially, on system information;
performing measurement of, at least, the at least one secondary synchronization signal;
performing reference signal measurements based, at least partially, on the system information;
obtaining timing information based, at least partially, on the at least one secondary synchronization signal;
obtaining timing information based, at least partially, on the at least part of the physical broadcast channel; or
detecting a demodulation reference signal of the at least part of the physical broadcast channel and demodulating the at least part of the physical broadcast channel.

6. The apparatus of any of claims 1 through 5, wherein the at least one primary synchronization signal is configured to indicate at least one of:
a periodicity associated with primary synchronization signal transmission,
a periodicity associated with synchronization signal transmission,
a periodicity associated with system information transmission,
a periodicity associated with demodulation reference signal transmission,
a periodicity associated with physical broadcast channel transmission,
whether at least one secondary synchronization signal is to be transmitted with or after the at least one primary synchronization signal,
whether system information is to be transmitted with or after the at least one primary synchronization signal,
whether at least one demodulation reference signal is to be transmitted with or after the at least one primary synchronization signal,
whether at least part of a physical broadcast channel is to be transmitted with or after the at least one primary synchronization signal,
a type of deployment of the cell, or
information associated with a synchronization signal transmission cycle of the transmission method of the cell.

7. The apparatus of any of claims 1 through 6, wherein the means configured for determining the transmission method of the cell based, at least partially, on the at least one primary synchronization signal comprises means configured for:
determining a sequence type of the at least one primary synchronization signal; and
determining the transmission method of the cell based, at least partially, on the determined sequence type.

8. The apparatus of any of claims 1 through 6, wherein the means configured for determining the transmission method of the cell based, at least partially, on the at least one primary synchronization signal comprises means configured for:
determining at least one of:
a physical resource block size associated with the at least one primary synchronization signal,
a number of resource elements associated with the at least one primary synchronization signal, or
a sequence length associated with the at least one primary synchronization signal; and
determining the transmission method of the cell based, at least partially, on the at least one of the physical resource block size, the number of resource elements, or the sequence length.

9. The apparatus of claim 8, wherein the sequence length is determined, wherein the means are further configured for:
determining a first correlation between a predetermined sequence length and the sequence length associated with the at least one primary synchronization signal;
determining a second correlation between a predetermined sequence length and the sequence length associated with the at least one primary synchronization signal;
determining a third correlation between a predetermined sequence length and the sequence length associated with the at least one primary synchronization signal;
determining a maximum correlation among the first correlation, the second correlation, and the third correlation; and
determining the transmission method of the cell based, at least partially, on the maximum correlation.

10. An apparatus comprising means for:
determining, at least, a transmission method for a cell; and
transmitting, to a user equipment, at least one primary synchronization signal, wherein the at least one primary synchronization signal is configured to indicate the determined transmission method.

11. The apparatus of claim 10, wherein the transmission method is determined based, at least partially, on at least one of:
network traffic in the cell,
a load of the cell, or
an expected load for the cell.

12. The apparatus of claim 10 or 11, wherein the transmission method comprises one of:
only transmission of the at least one primary synchronization signal,
transmission of the at least one primary synchronization signal and at least one secondary synchronization signal, or
transmission of the at least one primary synchronization signal, at least one secondary synchronization signal, and at least part of a physical broadcast channel.

13. The apparatus of any of claims 10 through 12, wherein the at least one primary synchronization signal is configured to indicate at least one of:
a periodicity associated with primary synchronization signal transmission,
a periodicity associated with synchronization signal transmission,
a periodicity associated with system information transmission,
a periodicity associated with demodulation reference signal transmission,
a periodicity associated with physical broadcast channel transmission,
whether at least one secondary synchronization signal is to be transmitted with or after the at least one primary synchronization signal,
whether system information is to be transmitted with or after the at least one primary synchronization signal,
whether at least one demodulation reference signal is to be transmitted with or after the at least one primary synchronization signal,
whether at least part of a physical broadcast channel is to be transmitted with or after the at least one primary synchronization signal,
a type of deployment of the cell, or
information associated with a synchronization signal transmission cycle of the transmission method of the cell.

14. The apparatus of any of claims 10 through 13, wherein a sequence type of the at least one primary synchronization signal is configured to indicate the transmission method.

15. The apparatus of any of claims 10 through 13, wherein at least one of:
a physical resource block size associated with the at least one primary synchronization signal,
a number of resource elements associated with the at least one primary synchronization signal, or
a sequence length associated with the at least one primary synchronization signal
is configured to indicate the transmission method.
